# EUROPEAN PATENT APPLICATION

(11) **EP 1 747 831 A1**
(43) Date of publication of application: **31.01.2007**
(21) Application number: 05016306.2
(22) Date of filing: 27.07.2005
(51) Int. Cl.: B23B 51/00

(54) **Drill bit with multiple stepped cutting edges**

(71) Applicant: YIH TROUN ENTERPRISE CO., LTD., Shinjuang City (TW)
(72) Inventor: Chen, Li-Cheng, Shinjuang City (TW)
(74) Representative: Casalonga, Axel

(57) **Abstract**

A drill bit has a butt (10) and a shaft (20). The shaft (20) connects to the butt (10) and has a central axis, a tip (201), multiple grooves (21) and multiple steps (22). The grooves (21) are formed in the shaft (20), and each groove (21) has a force-bearing surface (211). The steps (22) are formed on the tip (201) of the shaft (20) outward from the central axis. Each step (22) has at least one cutting edge (232) on the step (22) and aligning with the force-bearing surface (211).

## Description

### 1. Field of the Invention

The present invention relates to a drill bit, especially to a drill bit with multiple stepped cutting edges.

### 2. Description of the Prior Arts

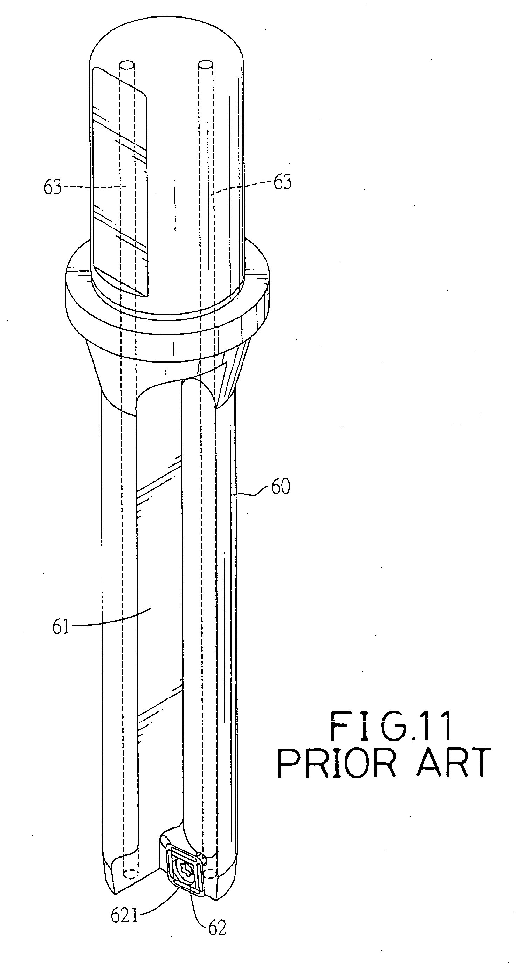

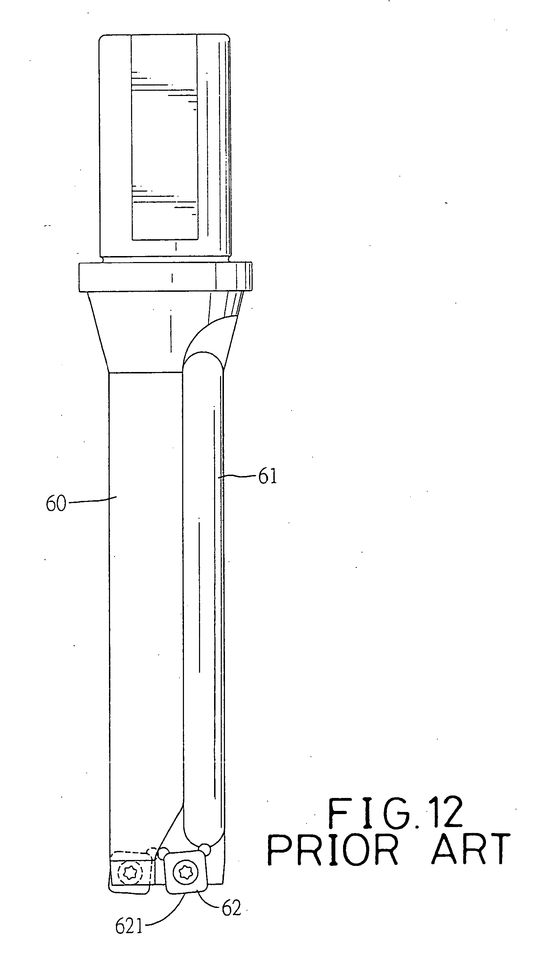

A drill is used to drill a hole in a workpiece. The drill uses a drill bit to form the hole in the workpiece. With reference to Figs. 11 and 12, a conventional drill bit (60) comprises a butt, a shaft and two longitudinal holes (63). The shaft is formed with the butt and has a radius, a tip, two grooves (61) and two blades (62). The grooves (61) are formed longitudinally in the shaft to keep shavings from jamming the drill bit (60) in the hole. The blades (62) are attached to the grooves (61) at the tip, and each blade (62) has a cutting edge (621) at the tip. The longitudinal holes (63) are formed through the drill bit (60) to provide a cutting solvent.

The butt of the conventional drill bit (60) connects to a drill, and the drill rotates the conventional drill bit (60). The cutting edges (621) of the blade (62) cut the workpiece to form a hole. The radius of the shaft determines the length of the cutting edge (621). A longer cutting edge (621) drills a bigger hole. However, the resistance to rotation of the drill bit (60) is greater when a longer cutting edge (621) cuts the workpiece. The greater resistance easily breaks the conventional drill bit (60). Furthermore, the shavings are also larger when the longer cutting edge (621) cuts the workpiece. The larger shavings are more difficult to remove from the hole when drilling a workpiece and jam in the grooves (61) in the shaft of the drill bit (60).

To overcome the shortcomings, the present invention provides a drill bit with multiple stepped cutting edges to mitigate or obviate the aforementioned problems.

The main objective of the invention is to provide a drill bit with multiple stepped cutting edges. The drill bit has a butt and a shaft. The shaft is formed with the butt and has a central axis, an exterior surface, a tip, multiple grooves and multiple steps. The grooves are formed in exterior surface of the shaft, and each groove has a force-bearing surface. The steps are formed at the tip of the shaft in steps outward from the central axis. Each step is defined on and aligned with the force-bearing surface and has a cutting edge.

Other objectives, advantages and novel features of the invention will become more apparent from the following detailed description when taken in conjunction with the accompanying drawings.

### IN THE DRAWINGS

Fig. 1 is a perspective view of a first embodiment of a drill bit with multiple stepped cutting edges in accordance with the present invention;
Fig. 2 is a side view of the drill bit in Fig. 1;
Fig. 3 is an exploded perspective view of the drill bit in Fig. 1;
Fig. 4 is a side view of a second embodiment of a tip of a drill bit with multiple stepped cutting edges in accordance with the present invention;
Fig. 5 is a side view of a third embodiment of a tip of a drill bit with multiple stepped cutting edges in accordance with the present invention;
Fig. 6 is an exploded side view of a fourth embodiment of a tip of a drill bit with multiple stepped cutting edges in accordance with the present invention;
Fig. 7 is an exploded side view of the tip of the drill bit in Fig. 6;
Fig. 8 is a side view of the tip of the drill bit in Fig. 6;
Fig. 9 is a perspective view of a blade of the drill bit in Fig. 6;
Fig. 10 is a cross sectional side view of a hole in a workpiece drilled with a drill bit in accordance with the present invention;
Fig. 11 is a perspective view of a conventional drill bit in accordance with the prior art; and
Fig. 12 is a side view of the conventional drill bit in Fig. 11.

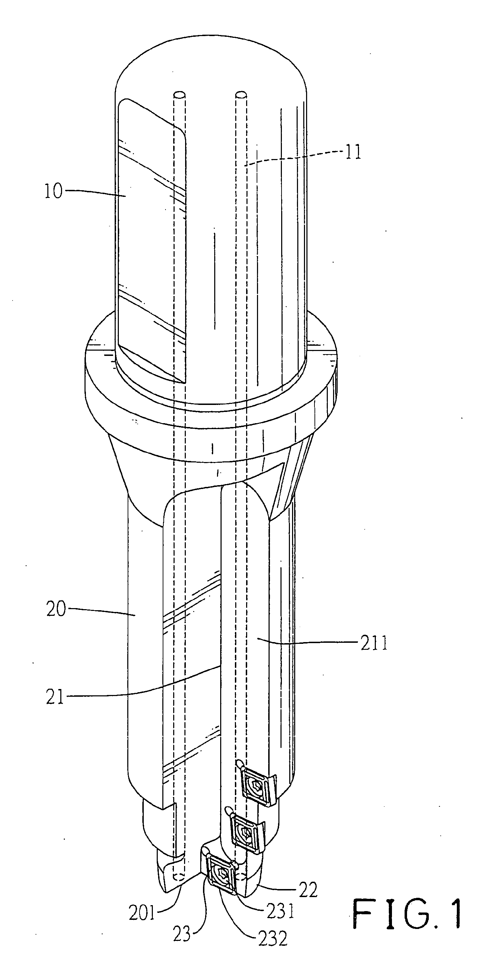

With reference to Figs. 1 and 4-6, a drill bit with multiple stepped cutting edges in accordance with the present invention comprises at least one optional longitudinal hole (11), a butt (10) and a shaft (20, 30, 40, 50).

The at least one longitudinal hole (11) is formed through the drill bit.

The butt (10) connects to and is rotated by a drill.

The shaft (20, 30, 40, 50) is formed with the butt (10) and has a central axis, an exterior surface, a proximal end multiple grooves (21,31,41,51) and a tip (201, 301, 401, 501).

The proximal end of the shaft (20, 30, 40, 50) is formed with the butt (10).

The grooves (21, 31, 41, 51) are formed in the exterior surface of the shaft (20, 30, 40, 50) from the proximal end to the tip (201, 301, 401, 501), and each groove (21, 31, 41, 51) has at least one force-bearing surface (211,311,411, 511).

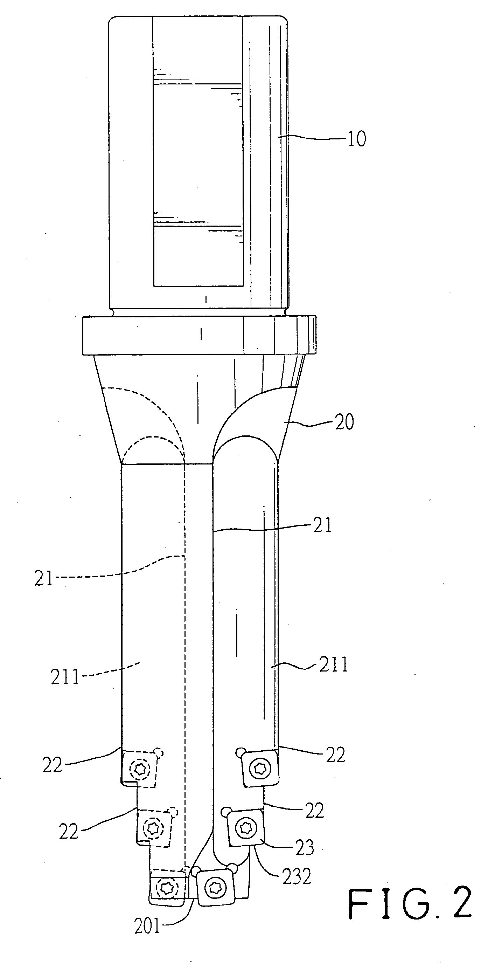

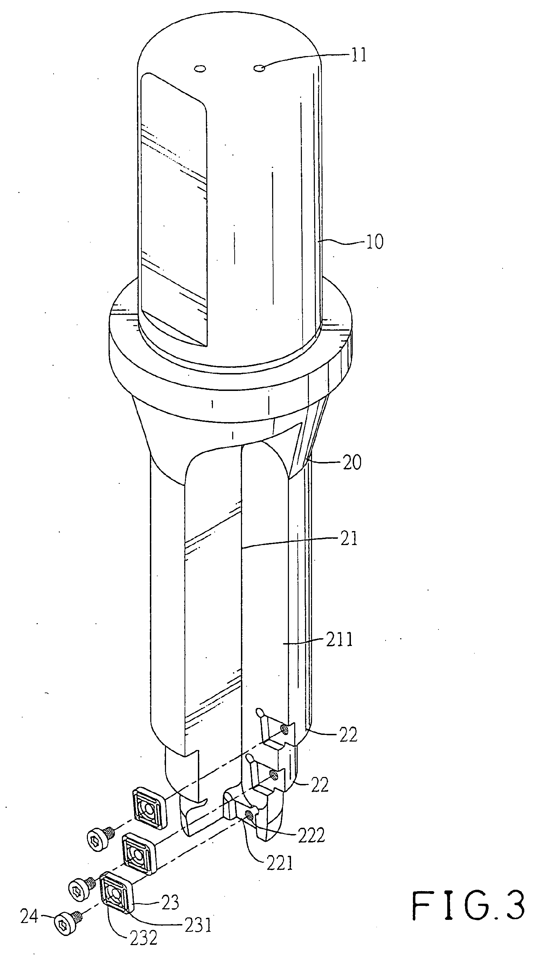

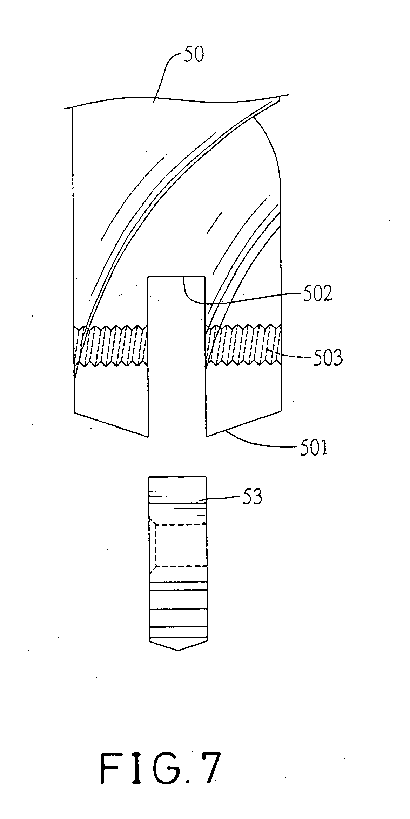

The tip (201, 301, 401, 501) has multiple steps (22, 32, 42, 52) and may have a mounting slot (502) as shown in Fig. 7 and a one-piece blade (53). With further reference to Figs. 2 and 3, The steps (22, 32, 42, 52) are formed at the tip (201, 301, 401, 501) of the shaft (20, 30, 40, 50) outward from the central axis, have multiple cutting edges (232, 331, 421, 533) and may have multiple mounting recesses (221), multiple threaded holes (222) and multiple blades (23, 33). The cutting edges (232, 331, 421, 533) correspond respectively to the steps (22, 32, 42, 52) and align respectively with the force-bearing surfaces (211, 311, 411,511).

The mounting recesses (221) are formed respectively in the steps (22) and align respectively with the force-bearing surfaces (211) in the grooves (21). A threaded hole (222) is formed in each mounting recess (221).

The blades (23, 33) are attached to the steps (22, 32), align respectively with the force-bearing surfaces (211, 311) and respectively have cutting edge (232, 331) and may have a screw (24, 34). The screw (24, 34) extends through the blade (23, 33) and screws into the threaded hole (222) to hold the blade (23, 33) on the step (22, 32).

The blades (23) in a first embodiment of the drill bit with multiple stepped cutting edges in accordance with the present invention are mounted respectively in the mounting recesses (221).

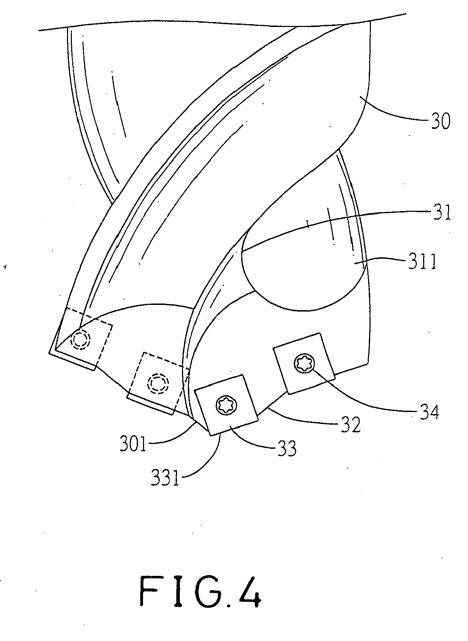

With reference to Fig. 4, the blades (33) in a second embodiment of the drill bit with multiple stepped cutting edges in accordance with the present invention are attached directly to the steps (32) and align with the force-bearing surface (311).

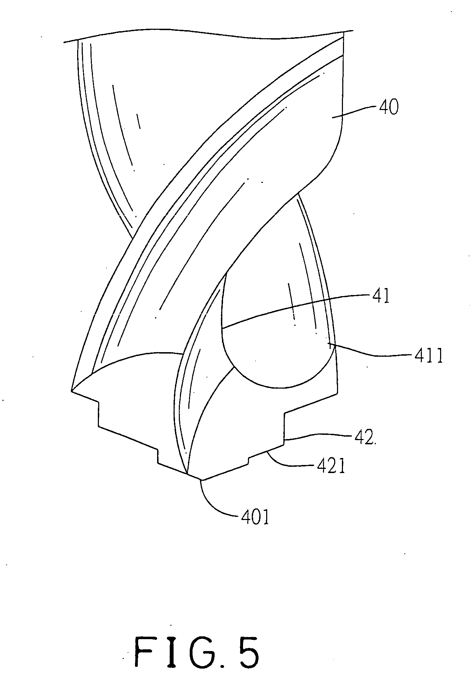

With reference to Fig. 5, the cutting edges (421) in a third embodiment of the drill bit with multiple stepped cutting edges in accordance with the present invention are directly formed respectively on the steps (42).

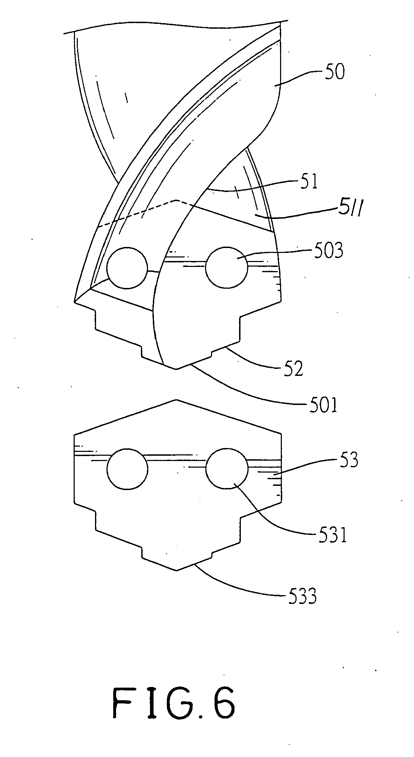

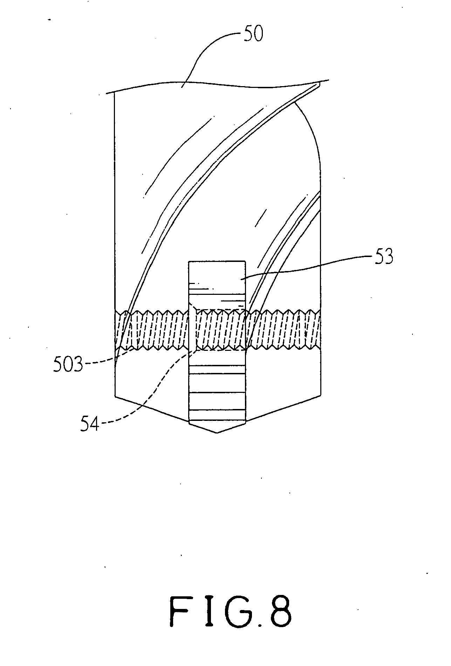

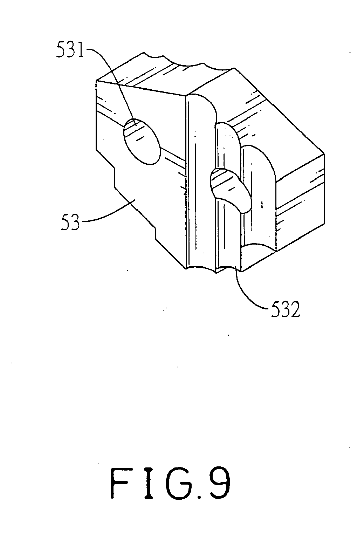

With reference to Figs. 6-9, the mounting slot (502) in a fourth embodiment of the drill bit with multiple stepped cutting edges in accordance with the present invention is formed longitudinally in the tip (501) of the shaft (50). The one-piece blade (53) is mounted in the mounting slot (502), aligns with the force-bearing surfaces (511) and may have multiple through holes (531) and multiple shaving recesses (532). The through holes (531) are formed through the one-piece blade (53). The shaving recesses (532) are formed on the one-piece blade (53) and correspond respectively to the steps (52). The cutting edges (533) are formed on the one-piece blade (53) and align respectively with the steps (52). The shaft (50) may have multiple threaded holes (503) and multiple screws (54). The threaded holes (503) are formed through the shaft (50) and align respectively with the through holes (S31) in the one-piece blade (53). The screws (54) extend respectively through the through holes (S31) and screw respectively into the threaded holes (503) to securely attach the one-piece blade (53).

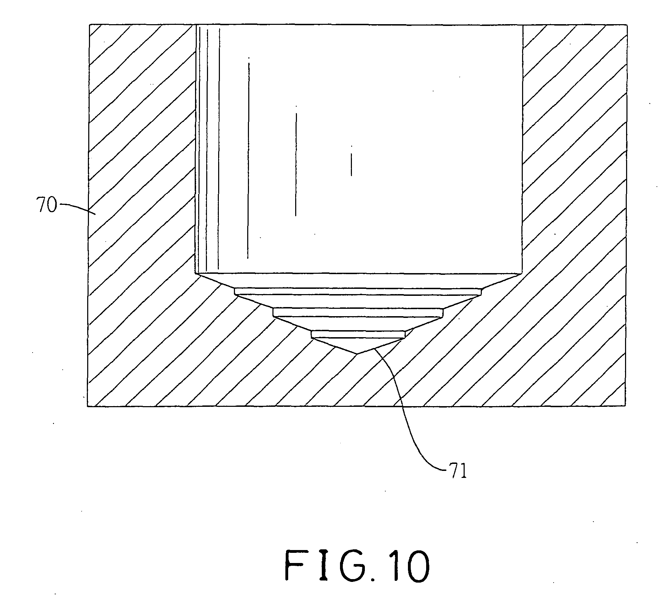

How a hole (71) is drilled in a workpiece (70) is by the drill bit previously described is described with reference to Figs. 1, 4-6 and 10. Because the drill bit has multiple steps (22, 32, 42, 52), the drill bit shaves away small strips of the workpiece to form the hole (71). Therefore, the resistance on any particular cutting edge will not be very large when a large hole is drilled. Consequently, the drill bit will not be broken easily, and the lifespan of the drill bit is longer. Furthermore, the shavings are smaller and easier to clear from a hole being drilled.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A drill bit with multiple stepped cutting edges comprising
a butt (10); and
a shaft (20, 30, 40, 50) connecting to the butt (10) and having
a central axis;
an exterior surface;
a proximal end formed with the butt (10);
a tip (201, 301, 401, 501);
multiple grooves (21, 31, 41, 51) formed in the exterior surface of the shaft (20, 30, 40, 50) from the proximal end to the tip (201, 301, 401, 501), and each groove (21, 31, 41, 51) having a force-bearing surface (211, 311, 411, 511); and
multiple steps (22, 32, 42, 52) formed at the tip (201, 301, 401, 501) of the shaft (20, 30, 40, 50) outward from the central axis, and each step (22, 32, 42, 52) having at least one cutting edge (232, 331, 421, 533) on the step (22, 32, 42, 52) and aligning with the force-bearing surface (211, 311, 411, S11).

2. The drill bit as claimed in claim 1, wherein the
the shaft (22) further has multiple blades (23) attached to each step (22) and aligned respectively with the force-bearing surfaces (211); and
the cutting edges (232) are formed respectively on the blades (23).

3. The drill bit as claimed in claim 2, wherein
each step (22) further has
multiple mounting recesses (221) formed in the step (22) and aligned respectively to the force-bearing surfaces (211) of the grooves (21); and
multiple threaded hole (222) formed in each mounting recess (221); and
the blades (23) are mounted respectively in the mounting recesses (221).

4. The drill bit as claimed in claim 3, wherein each blade (23) has a screw (24) extending through the blade (23) and screwing into the threaded hole (222) to attach the blade (23)

5. The drill bit as claimed in claim 1, wherein
the shaft (30) further has multiple blades (33), and the blade (33) are attached respectively to the steps (32) and align respectively with the force-bearing surface (331); and
the cutting edges (331) are formed respectively on the blades (33).

6. The drill bit as claimed in claim 1, wherein the cutting edges (421) are formed respectively on the edges (42).

7. The drill bit as claimed in claim 1, wherein
the tip (501) of the shaft (50) further has
a mounting slot (502) formed in the tip (501) of the shaft (50); and
a one-piece blade (53) mounted in the mounting slot (502) and aligning with the force-bearing surfaces (511); and
the cutting edges (533) are formed on the one-piece blade (53) and align respectively with the steps (52).

8. The drill bit as claimed in claim 7, wherein
the one-piece blade further has multiple through holes (531) formed through the one-piece blade (53); and
the shaft (50) further has
multiple threaded holes (503) formed through the shaft (50) and aligning respectively with the through holes (531) in the one-piece blade (53); and
multiple screws (54) extending respectively through the through holes (531) and screwing into the threaded holes (503) to hold the one-piece blade (53).

9. The drill bit as claimed in claim 8, wherein the one-piece blade further has multiple shaving recesses (532) formed on the one-piece blade (53) and corresponding respectively to the steps (52).

10. The drill bit as claimed in claim 1, 2, 3, 4, 5, 6, 7, 8, or 912 further comprising at least one longitudinal hole (11) formed longitudinally through the drill bit.
